(19) Europäisches Patentamt
European Patent Office
Office européen des brevets

(11) EP 2 325 242 B1

(12) EUROPEAN PATENT SPECIFICATION

(45) Date of publication and mention of the grant of the patent:
**10.07.2013 Bulletin 2013/28**

(51) Int Cl.:
***C08K 5/00*** *(2006.01)*
***C08K 3/36*** *(2006.01)*
***C08K 5/47*** *(2006.01)*
***B60C 1/00*** *(2006.01)*
***C08K 5/40*** *(2006.01)*

(21) Application number: **10009229.5**

(22) Date of filing: **06.09.2010**

(54) **Rubber composition for cap tread and studless tire**

Gummizusammensetzung für Reifenlauffäche und spikelosen Reifen

Composition de caoutchouc pour bande de roulement et pneu non clouté

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.11.2009 JP 2009255234**

(43) Date of publication of application:
**25.05.2011 Bulletin 2011/21**

(73) Proprietor: **Sumitomo Rubber Industries, Ltd.**
**Kobe-shi, Hyogo 651-0072 (JP)**

(72) Inventor: **Kojima, Ryoji**
**Kobe-shi**
**Hyogo 651-0072 (JP)**

(74) Representative: **Manitz, Finsterwald & Partner GbR**
**Postfach 31 02 20**
**80102 München (DE)**

(56) References cited:
**EP-A1- 0 818 500**
**EP-A1- 1 731 560**
**GB-A- 836 716**
**JP-A- 11 049 891**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 325 242 B1

## Description

### TECHNICAL FIELD

The present invention relates to a rubber composition for a cap tread and a studless tire (winter tire) produced using the rubber composition.

### BACKGROUND ART

Vehicles have been equipped with spike tires or tires with chains when driving snow- and ice-covered roads. This, however, causes environmental problems such as powder dust pollution, and therefore studless tires have been developed as the replacement for the spike tires and the tires with chains for driving snow- and ice-covered roads. The studless tires have been improved in their materials and designs for driving the snow-covered roads having rougher surfaces compared to the surfaces of usual roads. For example, studies have been made to develop a rubber composition that contains diene rubber having excellent low-temperature properties and contains a large amount of a softening agent so as to enhance a softening effect.

Age resistors have been widely used for conventional rubber compositions for tires and the like in order to improve the heat resistance of the rubber compositions. Examples of the age resistors for general purposes include amine age resistors such as N-(1,3-dimethylbutyl)-N'-phenyl-p-phenylenediamine (6PPD) and N-phenyl-N'-isopropyl-p-phenylenediamine (IPPD).

The increase in hardness of a studless tire caused by degradation over time (hardening degradation) may significantly reduce the performance on ice (braking performance on ice). In order to solve this problem, the amount of an age resistor has been increased or a softening agent has been used conventionally. However, the method of increasing the amount of an age resistor causes problems such as that the tire surface turns brown due to blooming of the age resistor on the surface, which leads to poor appearance of the tire. In addition, the method of using a softening agent causes reduction in performance on ice itself depending on the kind of the softening agent, and therefore cannot sufficiently improve the performance on ice and the performance of inhibiting hardening degradation together.

Accordingly, it is desired to provide a rubber composition that improves heat resistance to extend the life-span without increasing the amount of an age resistor.

Patent Document 1 discloses a rubber composition in which N-(1-methylheptyl)-N'-phenyl-p-phenylenediamine as an age resistor and a wax are added to diene rubber. However, it still has room for improvement in heat resistance.

Patent Document 1: JP H10-324779 A

JP 11-049,891 A discloses a rubber composition for a pneumatic tire including a rubber component, carbon black, silica, 0.2 to 5 phr of a heat-resistant cross-linking agent, a silane coupling agent and a dispersion-improving agent.

EP 1 731 560 A1 relates to a rubber composition including natural rubber, silica, a benzothiazolylsulfenamide vulcanization accelerator and a thiuram compound, such as tetrabenzylthiuramdisulfide.

### SUMMARY OF THE INVENTION

The present invention aims to solve the above problems and to provide a rubber composition that improves heat resistance and particularly inhibits the changes in properties (e.g. hardness change) of the vulcanized rubber composition (rubber hardening degradation) due to long-term use without containing an increased amount of an age resistor, and thereby extends the life-span without causing deterioration of the performance on ice, as well as reduces the vulcanization time while maintaining good scorch resistance, and increase cross-linking efficiency; and a studless tire having a cap tread produced from the rubber composition.

The present inventors found that a rubber composition comprising a rubber component containing an isoprene-based rubber, silica, and a compound represented by the following formula (I) and/or (II) improves heat resistance, and particularly inhibits the rubber hardening degradation. However, this method causes new problems of increase in vulcanization time and reduction in cross-linking efficiency. Then, as a result of earnest investigations, the present inventors found that the rubber composition comprising a thiuram vulcanization accelerator in addition to the above three components improves heat resistance, and simultaneously, solves the above new problems.
That is, the present invention relates to a rubber composition for a cap tread, comprising:

- a rubber component containing an isoprene-based rubber and butadiene rubber, wherein the amount of the butadiene rubber is 10 to 90 % by mass based on 100 % by mass of the rubber component,

- silica,
- a compound represented by formula (I) and/or (II) and
- a thiuram vulcanization accelerator, wherein the amount of the thiuram vulcanisation accelerator is 0.1 to 1.0 parts by mass par 100 parts by mass of the rubber component.

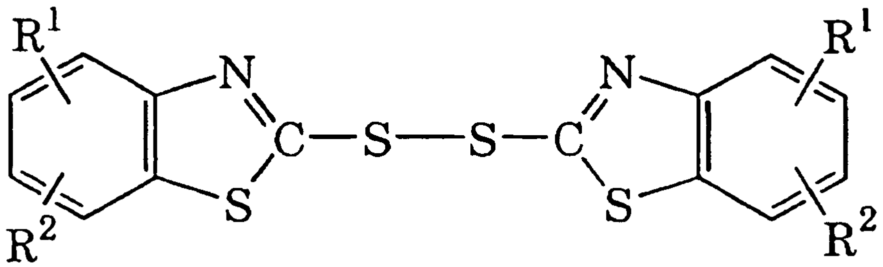

(I)

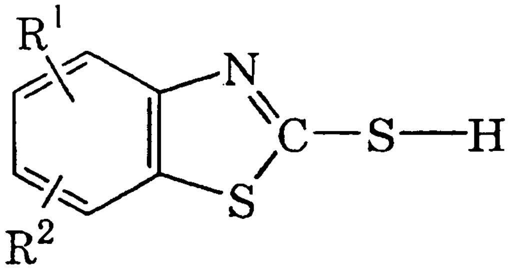

(II)

In formulae (I) and (II), $R^1$ and $R^2$ may be the same as or different from each other, and $R^1$ and $R^2$ each represent a hydrogen atom, an alkyl group, an aryl group, or an aralkyl group, provided that the case where $R^1$ and $R^2$ are simultaneously hydrogen atoms is excluded.

The isoprene-based rubber is desirably at least one rubber selected from the group consisting of an isoprene rubber, a natural rubber, and a modified natural rubber.

The compound is desirably represented by formula (III).

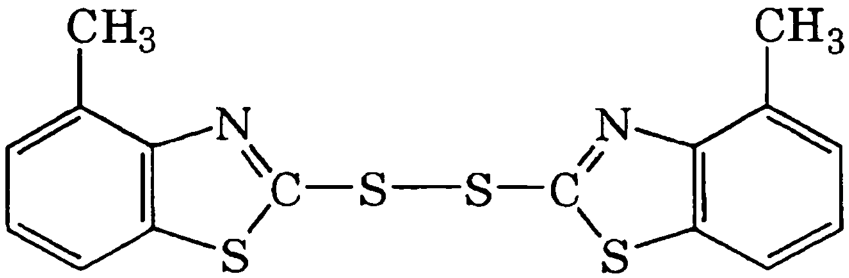

(III)

The rubber composition desirably has a hardness of 42 to 70 at 25°C.

The present invention also relates to a studless tire that has a cap tread produced from the rubber composition.

The rubber composition of the present invention comprises

- a rubber component containing an isoprene-based rubber and butadiene rubber, wherein the amount of the butadiene rubber is 10 to 90 % by mass based on 100 % by mass of the rubber component,
- silica,
- a compound represented by formula (I) and/or (II) and
- a thiuram vulcanization accelerator, wherein the amount of the thiuram vulcanisation accelerator is 0.1 to 1.0 parts by mass par 100 parts by mass of the rubber component.

Accordingly, the present invention improves heat resistance without deteriorating the initial performance on ice, particularly inhibits the changes in properties (e.g. hardness change) of the vulcanized rubber composition (especially, rubber hardening degradation) due to long-term use, and thereby inhibits the reduction in performance on ice caused over time.

Further, the present invention reduces the vulcanization time while maintaining good scorch resistance, and improves cross-linking efficiency. Such an effect of inhibiting hardening degradation of the present invention is far better than those of SBR-based compositions such as those containing SBR and carbon black. In addition, since the present invention improves cross-linking efficiency, the rolling resistance and abrasion resistance can be improved. Accordingly, it is possible to extend the life-span of the rubber composition without increasing the amount of an age resistor such as 6PPD or reducing performance on ice, and to reduce the vulcanization time while maintaining good scorch resistance, and improve cross-linking efficiency. Therefore, the rubber composition of the present invention is suitably applicable to a cap tread of a studless tire.

BEST MODE FOR CARRYING OUT THE INVENTION

The rubber composition of the present invention comprises

- a rubber component containing an isoprene-based rubber and butadiene rubber, wherein the amount of the butadiene rubber is 10 to 90 % by mass based on 100 % by mass of the rubber component,
- silica,
- a compound represented by formula (I) and/or (II) and
- a thiuram vulcanization accelerator, wherein the amount of the thiuram vulcanisation accelerator is 0.1 to 1.0 parts by mass par 100 parts by mass of the rubber component.

The rubber composition comprising

- a rubber component containing an isoprene-based rubber and butadiene rubber, wherein the amount of the butadiene rubber is 10 to 90 % by mass based on 100 % by mass of the rubber component,
- silica,
- a compound represented by formula (I) and/or (II) and
- a thiuram vulcanization accelerator, wherein the amount of the thiuram vulcanisation accelerator is 0.1 to 1.0 parts by mass par 100 parts by mass of the rubber component.

improves heat resistance, and inhibits the changes in properties (e.g. hardness change) of the vulcanized rubber composition due to long-term use, in particular rubber hardening degradation. Also, the present invention solves new problems of increase in vulcanization time and reduction in cross-linking efficiency caused by the above components (more specifically, the cross-linking efficiency is improved and the vulcanization time is shortened while scorch resistance is secured). Further, the improvement in cross-linking efficiency by the thiuram vulcanization accelerator makes it possible to reduce the amount of sulfur that is not involved in effective cross-linking, through which rubber molecules are linked, in the rubber composition. Accordingly, it is possible to prevent problems such as hardening degradation caused by change of such useless sulfur during degradation.

The rubber hardening degradation used herein means a degradation phenomenon in which a vulcanized rubber composition becomes harder than that in the initial sate after heat is applied to the vulcanized rubber composition in the presence of oxygen as a degradation factor. In the present invention, such degradation can be effectively inhibited. Such an effect of inhibiting hardening degradation is completely different from a so-called thermal fatigue resistance (prevention of blow-out and chunk-out) and heat sag resistance, and is specifically exerted in the case that the rubber composition comprises the three components:

- a rubber component containing an isoprene-based rubber and butadiene rubber, wherein the amount of the butadiene rubber is 10 to 90 % by mass based on 100 % by mass of the rubber component,
- silica,
- a compound represented by formula (I) and/or (II) and
- a thiuram vulcanization accelerator, wherein the amount of the thiuram vulcanisation accelerator is 0.1 to 1.0 parts by mass par 100 parts by mass of the rubber component.

Further, in the case where the rubber composition contains these components, the effect of improving heat resistance (particularly, the effect of inhibiting hardening degradation) is synergistically exerted. This rubber composition exerts a markedly great effect of inhibiting hardening degradation in comparison with, for example, a rubber composition containing a styrene butadiene rubber, silica, and a compound represented by formula (I) and/or (II).

In the present invention, an isoprene-based rubber is used as a rubber component. Although a rubber with an isoprene skeleton is used in the present invention, heat resistance (particularly the effect of inhibiting hardening degradation) is improved. Examples of the isoprene-based rubber include isoprene rubber (IR), natural rubber (NR), and

modified natural rubber. Examples of the NR include deproteinized natural rubber (DPNR) and highly purified natural rubber (HPNR), and examples of the modified natural rubber include epoxidized natural rubber (ENR), hydrogenated natural rubber (HNR), and grafted natural rubber. Examples of the NR include ones generally used in the tire industry, such as SIR20, RSS#3, and TSR20. Desirable among these are NR and IR because of their low cost.

In the present invention, the amount of the isoprene-based rubber in 100% by mass of the rubber component is 20% by mass or more, desirably 30% by mass or more, and more desirably 40% by mass or more. If the amount is less than 20% by mass, the effect of inhibiting hardening degradation may not be sufficiently exerted. The amount of the isoprene-based rubber in 100% by mass of the rubber component is desirably 80% by mass or less, and more desirably 70% by mass or less. If the amount exceeds 80% by mass, low-temperature properties that a studless tire requires may not be secured.

Examples of rubbers that can be used in addition to the isoprene-based rubber and butadiene rubber (BR) include styrene butadiene rubber (SBR), styrene isoprene butadiene rubber (SIBR), ethylene propylene diene rubber (EPDM), chloroprene rubber (CR), and acrylonitrile butadiene rubber (NBR). The rubbers may be used alone, or two or more kinds thereof may be used in combination. BR is contained because it enables maintenance of good performance on ice.

The BR is not particularly limited. Examples thereof include BRs with a high cis-content such as BR1220 and BR1250H (each produced by ZEON Corporation), and BR130B and BR150B (each produced by Ube Industries, Ltd.); and syndiotactic polybutadiene crystal-containing BRs such as VCR412 and VCR617 (each produced by Ube Industries, Ltd.). BRs with a cis-content of 90% by mass or more are desirable among these because it enables maintenance of low-temperature properties.

In the present invention, the amount of the BR in 100% by mass of the rubber component is 10% by mass or more, desirably 20% by mass or more, further desirably 30% by mass or more, and most desirably 50% by mass or more. If the amount is less than 10% by mass, the performance on ice that a studless tire requires may not be sufficiently exerted.

The amount of the BR in 100% by mass of the rubber component is 90% by mass or less, desirably 80% by mass or less, and further desirably 70% by mass or less. If the amount exceeds 90% by mass, processability of the rubber composition may be significantly deteriorated.

The rubber composition of the present invention contains silica. The use of silica improves heat resistance (particularly the effect of inhibiting hardening degradation), and provides abrasion resistance, fuel economy, and the performance on ice that a studless tire requires. The silica is not particularly limited. Examples thereof include dry silica (silicic anhydride) and wet silica (hydrous silicic acid). The wet silica is desirable because it has a larger amount of silanol groups. Silica may be used alone, or two or more kinds thereof may be used in combination.

The nitrogen adsorption specific surface area ($N_2SA$) of the silica is desirably 50 $m^2/g$ or more, more desirably 80 $m^2/g$ or more, and further desirably 100 $m^2/g$ or more. If the $N_2SA$ is less than 50 $m^2/g$, the rubber reinforcement tends to decrease. The $N_2SA$ of the silica is desirably 300 $m^2/g$ or less, more desirably 250 $m^2/g$ or less, and further desirably 200 $m^2/g$ or less. If the $N_2SA$ is more than 300 $m^2/g$, the viscosity of the rubber composition tends to increase and the processability tends to be deteriorated.

The nitrogen adsorption specific surface area of the silica is determined by the BET method in accordance with ASTM D3037-81.

In the rubber composition for a cap tread according to the present invention, the amount of the silica is desirably 5 parts by mass or more, more desirably 10 parts by mass or more, and further desirably 15 parts by mass or more, per 100 parts by mass of the rubber component. If the amount is less than 5 parts by mass, the effect of inhibiting hardening degradation and the performance on ice may not be sufficiently exerted. In addition, the effects of inhibiting reduction in vulcanization speed and cross-linking efficiency, which are caused by the use of silica, may be decreased. The amount of the silica is desirably 80 parts by mass or less, more desirably 70 parts by mass or less, further desirably 60 parts by mass or less, and most desirably 50 parts by mass or less, per 100 parts by mass of the rubber component. If the amount is more than 80 parts by mass, the processability and workability of the rubber composition may be deteriorated.

The rubber composition of the present invention desirably contains a silane coupling agent together with silica. Any silane coupling agent conventionally used in combination with silica in the rubber industry may be used. Examples thereof include sulfide-type silane coupling agents such as bis(3-triethoxysilylpropyl)tetrasulfide, bis(2-triethoxysilylethyl) tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis (4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropylbenzothiazolyl tetrasulfide, and 3-triethoxysilylpropylbenzothiazole tetrasulfide. Other examples thereof include mercapto-type, vinyl-type, glycidoxy-type, nitro-type, and chloro-type silane coupling agents. Desirable among these are bis(3-triethoxysilylpropyl)tetrasulfide and bis(3-triethoxysilylpropyl)disulfide in terms of good reinforcing

effect of the silane coupling agent and processability. Each of these silane coupling agents may be used alone or two or more of these may be used in combination.

The amount of the silane coupling agent is desirably 1 part by mass or more, and more desirably 2 parts by mass or more, per 100 parts by mass of the silica. If the amount is less than 1 part by mass, breaking strength tends to decrease greatly. The amount of the silane coupling agent is desirably 15 parts by mass or less, and more desirably 10 parts by mass or less, per 100 parts by mass of the silica. If the amount is more than 15 parts by mass, the effects caused by adding the silane coupling agent, such as increase in breaking strength and decrease in rolling resistance, tend not to be exerted.

In the present invention, a compound represented by the following formula (I) and/or (II) and a thiuram vulcanization accelerator are used in combination as a vulcanization accelerator. The rubber composition that contains an isoprene-based rubber or an isoprene-based rubber and a BR as a rubber component is often inferior in heat resistance and aging resistance, and tends to undergo greater changes in properties such as hardness change caused by long-term use (especially hardening degradation); but the changes in properties can be inhibited by the use of a compound represented by formula (I) and/or (II). On the other hand, however, the use of the compound causes increase in vulcanization time and reduction in cross-linking efficiency. If the rubber composition further contains a guanidine accelerator, reduction in cross-linking efficiency is somewhat suppressed, but the improvement is not yet sufficient. In addition, scorch time decreases, and rubber burning may occur. Since the rubber composition of the present invention contains a specific vulcanization accelerator, a thiuram vulcanization accelerator, with other components, cross-linking efficiency is sufficiently improved while suitable scorch resistance is maintained. Accordingly, the vulcanization time can be reduced while favorable scorch resistance is maintained in the unvulcanized rubber composition. In addition, rolling resistance and abrasion resistance of the vulcanized rubber composition can be improved, and cross-linking efficiency can be further improved.

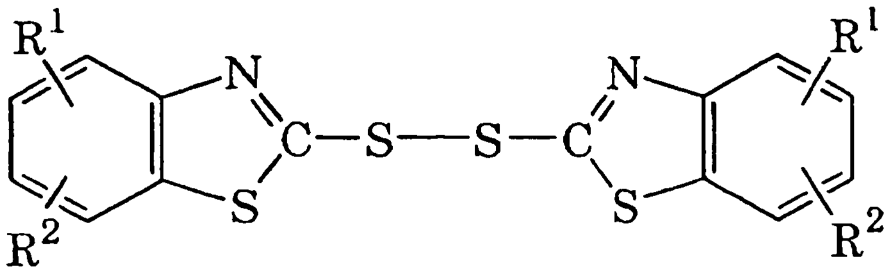

(I)

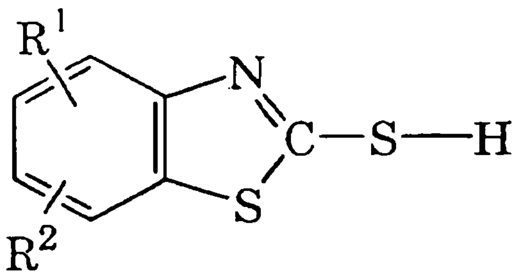

(II)

In formulae (I) and (II), $R^1$ and $R^2$ may be the same as or different from each other, and $R^1$ and $R^2$ each represent a hydrogen atom, an alkyl group, an aryl group, or an aralkyl group, provided that the case where $R^1$ and $R^2$ are simultaneously hydrogen atoms is excluded (that is, compounds in which both $R^1$ and $R^2$ bonded to the same ring are hydrogen atoms are excluded.).

For $R^1$ and $R^2$, desirable are C1-C10 alkyl groups, C6-C10 aryl groups, C7-C10 aralkyl groups. Examples of the alkyl group include a methyl group, an ethyl group, an n-propyl group, an isopropyl group, an n-butyl group, an isobutyl group, a sec-butyl group, a tert-butyl group, a pentyl group, a hexyl group, a heptyl group, a 2-ethylhexyl group, an octyl group, a nonyl group, and a decyl group. Examples of the aryl group include a phenyl group, a tolyl group, a xylyl group, a biphenyl group, a naphthyl group, an anthryl group, and a phenanthryl group. Examples of the aralkyl group include a benzyl group and a phenethyl group. The hydrocarbon group for $R^1$ and $R^2$ may be a straight, branched, or cyclic group. Desirable among alkyl groups, aryl groups, and aralkyl groups are alkyl groups. The number of carbons of the alkyl group is desirably 1 to 4 and more desirably 1 to 2. Desirably, $R^1$ is an alkyl group and $R^2$ is a hydrogen atom. In this case, the effect of inhibiting hardening degradation is favorably achieved.

Specific examples of the compound represented by formula (I) include: bis(4-methylbenzothiazolyl-2)-disulfide,

bis(4-ethylbenzothiazolyl-2)-disulfide, bis(5-methylbenzothiazolyl-2)-disulfide, bis(5-ethylbenzothiazolyl-2)-disulfide, bis(6-methylbenzothiazolyl-2)-disulfide, bis(6-ethylbenzothiazolyl-2)-disulfide, bis(4,5-dimethylbenzothiazolyl-2)-disulfide, bis(4,5-diethylbenzothiazolyl-2)-disulfide, bis(4-phenylbenzothiazolyl-2)-disulfide, bis(5-phenylbenzothiazolyl-2)-disulfide, and bis(6-phenylbenzothiazolyl-2)-disulfide. Specific examples of the compound represented by formula (II) include: 2-mercapto-4-methylbenzothiazole, 2-mercapto-4-ethylbenzothiazole, 2-mercapto-5-methylbenzothiazole, 2-mercapto-5-ethylbenzothiazole, 2-mercapto-6-methylbenzothiazole, 2-mercapto-6-ethylbenzothiazole, 2-mercapto-4,5-dimethylbenzothiazole, 2-mercapto-4, 5-diethylbenzothiazole, 2-mercapto-4-phenylbenzothiazole, 2-mercapto-5-phenylbenzothiazole, and 2-mercapto-6-phenylbenzothiazole. Desirable among these are bis(4-methylbenzothiazolyl-2)-disulfide, bis(5-methylbenzothiazolyl-2)-disulfide, mercapto-4-methylbenzothiazole, and mercapto-5-methylbenzothiazole. The compounds represented by formula (I) are more suitably used than the compounds represented by formula (II). The compound (4m-MBTS) represented by the following formula (III) is particularly suitably used among the above-mentioned compounds. When using the above compounds, the effect of inhibiting hardening degradation is favorably achieved.

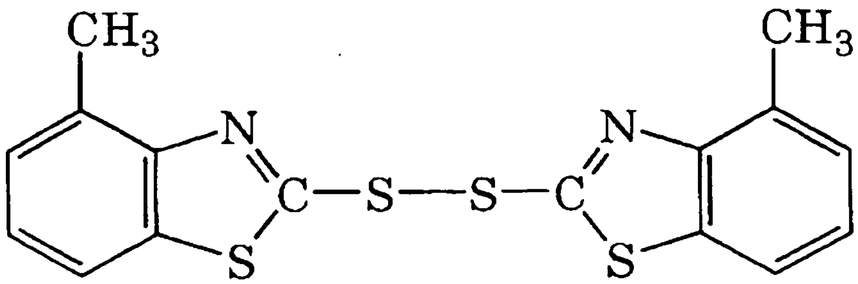

(III)

The compound represented by formula (I) and/or (II) may be used alone, or two or more kinds thereof may be used in combination. As a commercial product of the compound, a product produced by NOCIL Ltd., for example, may be used.

The total amount of the compounds represented by formula (I) and/or (II) is desirably 0.1 parts by mass or more, more desirably 0.2 parts by mass or more, and further desirably 0.4 parts by mass or more, per 100 parts by mass of the rubber component. If the total amount is less than 0.1 parts by mass, the effect of inhibiting hardening degradation may not be sufficiently exerted. The total amount is desirably 5.0 parts by mass or less, more desirably 3.0 parts by mass or less, and further desirably 2.0 parts by mass or less, per 100 parts by mass of the rubber component. If the total amount exceeds 5.0 parts by mass, it may be difficult to maintain a suitable crosslink density and cross-linking structure.

Examples of the thiuram vulcanization accelerator include: tetramethylthiuram disulfide (TMTD), tetraethylthiuram disulfide, tetramethylthiuram monosulfide (TMTM), dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and tetrakis(2-ethylhexyl)thiuram disulfide. Desirable among these are TMTM, tetraethylthiuram disulfide, and tetrabutylthiuram disulfide in terms of improvement in cross-linking efficiency, maintenance of suitable scorch resistance, reduction in vulcanization time, and toxicity lower than that of TMTD and the like compounds.

The amount of the thiuram vulcanization accelerator is 0.1 parts by mass or more, desirably 0.2 parts by mass or more, and further desirably 0.3 parts by mass or more, per 100 parts by mass of the rubber component. If the amount is less than 0.1 parts by mass, scorch resistance and cross-linking efficiency may not be improved. The amount of the thiuram vulcanization accelerator is 1 part by mass or less, desirably 0.8 parts by mass or less, and further desirably 0.6 parts by mass or less, per 100 parts by mass of the rubber component. If the amount exceeds 1 part by mass, the thiuram vulcanization accelerator may bloom, the scorch time may decrease, and the cost may increase unnecessarily.

The rubber composition of the present invention may contain other vulcanization accelerators, in addition to the compound represented by formula (I) and/or (II) and the thiuram vulcanization accelerator. In this case as well, the effect of inhibiting hardening degradation is suitably achieved.

Example of other vulcanization accelerators include N-tert-butyl-2-benzothiazolylsulfenamide (TBBS), N-cyclohexyl-2-benzothiazolylsulfenamide (CBS), N,N'-dicyclohexyl-2-benzothiazolylsulfenamide (DZ), mercaptobenzothiazole (MBT), dibenzothiazolyl disulfide (MBTS), and diphenylguanidine (DPG). For example, 0.1 to 2.0 parts by mass of DPG may be added with respect to 100 parts by mass of the rubber component.

In addition to the above ingredients, the rubber composition may optionally contain, as appropriate, compounding ingredients generally used in the rubber industry. Examples of the compounding ingredients include fillers such as carbon black, stearic acid, zinc oxide, age resistors, waxes, oil, and vulcanizing agents such as sulfur and sulfur compounds.

Examples of the usable carbon black include, but not limited to, GPF, FEF, HAF, ISAF, and SAF. Addition of the carbon black improves reinforcement of the rubber composition.

The nitrogen adsorption specific surface area ($N_2SA$) of the carbon black is desirably 70 $m^2/g$ or more, and more desirably 90 $m^2/g$ or more. If the $N_2SA$ is less than 70 $m^2/g$, rubber reinforcement tends to decrease. The $N_2SA$ of the carbon black is desirably 300 $m^2/g$ or less, more desirably 250 $m^2/g$ or less, and further desirably 150 $m^2/g$ or less. If the $N_2SA$ is more than 300 $m^2/g$, processability of the rubber composition tends to be deteriorated.
The nitrogen adsorption specific surface area of the carbon black is determined by the A method in accordance with JIS K6217.

If the rubber composition for a cap tread of the present invention contains carbon black and silica, the total amount of carbon black and silica is desirably 40 parts by mass or more, and more desirably 60 parts by mass or more, per 100 parts by mass of the rubber component. If the total amount is less than 40 parts by mass, the effect of inhibiting hardening degradation may not be favorably achieved. The total amount is desirably 100 parts by mass or less, and more desirably 80 parts by mass or less, per 100 parts by mass of the rubber component. If the total amount exceeds 100 parts by mass, dispersibility of the filler may be deteriorated.

In the present invention, an amine age resistor may be suitably used as an age resistor, in terms of its excellent breaking properties. The rubber composition of the present invention can improve heat resistance (especially the effect of inhibiting hardening degradation) without increase in the amount of the amine age resistor. Examples of the amine age resistor include amine derivatives such as diphenylamine derivatives and p-phenylenediamine derivatives. Examples of the diphenylamine derivatives include p-(p-toluenesulfonylamide)-diphenylamine, and octylated diphenylamine. Examples of the p-phenylenediamine derivatives include N-(1,3-dimethylbutyl)-N'-phenyl-p-phenylenediamine (6PPD), N-phenyl-N'-isopropyl-p-phenylenediamine (IPPD), and N,N'-di-2-naphthyl-p-phenylenediamine.

The amount of the amine age resistor is desirably 1 part by mass or more, and more desirably 1.5 parts by mass or more, per 100 parts by mass of the rubber component. If the amount is less than 1 part by mass, breaking properties may not be improved. The amount is desirably 6 parts by mass or less, and more desirably 4 parts by mass or less, per 100 parts by mass of the rubber component. If the amount exceeds 6 parts by mass, the bloom may be formed on the surface of the rubber composition.

The rubber composition of the present invention may contain oil. The oil contained therein improves processability and strength of the rubber composition. Examples of the oil include process oil, vegetable oil, and mixtures thereof. Examples of the process oil include paraffinic process oil, aromatic process oil, and naphthenic process oil. Specific examples of the paraffinic process oil include PW-32, PW-90, PW-150, and PS-32 produced by Idemitsu Kosan Co., Ltd. Specific examples of the aromatic process oil include AC-12, AC-460, AH-16, AH-24, and AH-58 produced by Idemitsu Kosan Co., Ltd. Examples of the vegetable oil include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. The paraffinic process oil is suitably used among these because of its favorable low-temperature properties.

If the rubber composition contains oil, the amount of the oil is desirably 5 parts by mass or more, and more desirably 15 parts by mass or more, per 100 parts by mass of the rubber component. If the amount is less than 5 parts by mass, the effect of improving processability may not be sufficiently exerted. The amount of the oil is desirably 60 parts by mass or less, and more desirably 50 parts by mass or less, per 100 parts by mass of the rubber component. If the amount exceeds 60 parts by mass, processability of the rubber composition may be deteriorated.

In the present invention, sulfur may be suitably used as a vulcanizing agent. Examples of the sulfur include sulfur powder, precipitated sulfur, colloidal sulfur, insoluble sulfur, and highly dispersible sulfur.
The amount of the sulfur is desirably 1 part by mass or more, and more desirably 1.5 parts by mass or more, per 100 parts by mass of the rubber component. If the amount is less than 1 part by mass, its vulcanizing effect may be small. The amount is desirably 6 parts by mass or less, and more desirably 4 parts by mass or less, per 100 parts by mass of the rubber component. If the amount exceeds 6 parts by mass, the effect of inhibiting hardening degradation may not be sufficiently exerted.

The rubber composition of the present invention may be produced by a usual method. More specifically, the rubber composition may be produced by mixing the aforementioned ingredients with a Banbury mixer, a kneader, or an open roll mill, and then vulcanizing the resultant mixture.

The hardness at 25°C of the (vulcanized) rubber composition of the present invention is desirably 70 or less, more desirably 60 or less, and further desirably 55 or less. If the hardness exceeds 70, performance on ice may be significantly deteriorated. The hardness at 25°C is desirably 42 or more, and more desirably 46 or more. If the hardness is less than 42, tread pattern blocks of a studless tire may be greatly deformed, and the performance on ice expected for a studless tire may be deteriorated. The hardness at 25°C may be set to the above range by adjusting the combination and blending ratio of the aforementioned ingredients.
The hardness at 25°C is determined by the measuring method described in examples below.

The rubber composition of the present invention is used for a cap tread of a studless tire. The cap tread is a

surface part of a tread having a multi-layer structure. The tread having a two-layer structure is composed of a surface layer (cap tread) and an inner layer (base tread).

The tread having a multi-layer structure may be produced by laminating rubber composition sheets into a predetermined shape, or by introducing a rubber composition into two or more extruders to form a sheet comprising two or more layers at the head exit of the extruders.

The studless tire of the present invention may be produced by a common method using the rubber composition. More specifically, an unvalcanized rubber composition is extruded and processed into a shape of a cap tread, and then molded on a tire building machine by a common method, and assembled with other tire components to form an unvulcanized tire. This unvulcanized tire is heated and pressurized in a vulcanizer to produce a studless tire.

The studless tire of the present invention is suitably used for passenger vehicles, trucks, and buses.

EXAMPLES

The present invention is more specifically described based on examples, and the present invention is not limited to these examples.

In the following, the respective chemical agents used in examples and comparative examples are listed.

NR: RSS#3

BR: BR150B produced by Ube Industries, Ltd. (cis content: 97% by mass, $ML_{1+4}$ (100°C): 40, viscosity of a 5% solution in toluene at 25°C: 48 cps, Mw/Mn: 3.3)

Carbon black: N220 produced by Cabot Japan K.K. ($N_2SA$: 111 $m^2/g$)

Silica: Ultrasil VN3 produced by Degussa AG ($N_2SA$: 175 $m^2/g$)

Silane coupling agent: Si266 (bis(3-triethoxysilylpropyl)disulfide) produced by Degussa AG

Oil: PS-32 produced by Idemitsu Kosan Co., Ltd.

Stearic acid: Kiri produced by NOF Corporation

Zinc oxide: Zinc oxide #2 produced by Mitsui Mining & Smelting Co., Ltd.

Age resistor: NOCRAC 6C (N-(1,3-dimethylbutyl)-N'-phenyl-p-phenylenediamine) produced by Ouchi Shinko Chemical Industrial Co., Ltd.

Wax: OZOACE wax produced by Nippon Seiro Co., Ltd.

Sulfur: Sulfur powder produced by Tsurumi Chemical Industry Co., Ltd.

Vulcanization accelerator TBBS: NOCCELER NS (N-tert-butyl-2-benzothiazolylsulfenamide) produced by Ouchi Shinko Chemical Industrial Co., Ltd.

Vulcanization accelerator 4m-MBTS: bis(4-methylbenzothiazolyl-2)-disulfide (formula (III)) produced by NOCIL Ltd.

Vulcanization accelerator TMTM: NOCCELER TS (tetramethylthiuram monosulfide) produced by Ouchi Shinko Chemical Industrial Co., Ltd.

Vulcanization accelerator DPG: NOCCELER D (diphenylguanidine) produced by Ouchi Shinko Chemical Industrial Co., Ltd.

Examples 1 to 5 and Comparative Examples 1 to 3

According to the formulations shown in Table 1, materials other than the sulfur and the vulcanization accelerators were kneaded with a 1.7-L Banbury mixer at 150°C for 5 minutes to give a kneaded mass. Thereafter, the sulfur and the vulcanization accelerators were kneaded into the kneaded mass with an open roll mill at 80°C for 3 minutes, whereby an unvulcanized rubber composition was produced. The produced unvulcanized rubber composition was press-vulcanized with a mold having a thickness of 0.5 mm at 170°C for 15 minutes, so that a vulcanized rubber composition was produced.

Each of the produced unvulcanized rubber compositions was molded into a shape of a cap tread, assembled with other tire components, and vulcanized at 170°C for 15 minutes to produce a test studless tire (tire size: 195/65R15).

(Degradation conditions)

The thus-produced vulcanized rubber compositions and test studless tires were thermally degraded in an 80°C oven for 168 hours. The resultant compositions and tires were used as degraded samples (thermally-degraded vulcanized rubber compositions, and thermally-degraded test studless tires).

The obtained unvulcanized rubber compositions, vulcanized rubber compositions, test studless tires, thermally-degraded vulcanized rubber compositions, and thermally-degraded test studless tires were evaluated in the following ways. Table 1 shows the results.

<Vulcanization test>

The obtained unvulcanized rubber composition was subjected to a vulcanization test at a measuring temperature of 170°C with an oscillating curemeter (curelastometer produced by JSR) in accordance with JIS K6300 and then a vulcanization speed curve plotting time versus torque was obtained.
The minimum torque in the vulcanization speed curve was referred to as ML, the maximum thereof as MH, and the difference (MH-ML) as a torque rise (ME). The torque rise value of Example 1 was regarded as 100, and the result of each example was expressed as an index. The larger the torque rise value is, the higher and the better the cross-linking efficiency is.
In addition, the time $T_{95}$ (minutes) (95% torque rise point) was read off at which the torque reached to ML+0.95ME which indicates an optimum vulcanization time. The time $T_{95}$ of Example 1 was regarded as 100, and the result of each example was expressed as an index. The larger the vulcanization time $T_{95}$ is, the longer the vulcanization time is, and the lower the productivity is.

<Hardness (at 25°C) >

The hardness at 25°C of the vulcanized rubber composition and the thermally-degraded vulcanized rubber composition was determined with a type A durometer in accordance with JIS K6253 "Rubber, vulcanized or thermoplastic - Determination of hardness".

<Performance on ice>

A set of the test studless tires (fresh state) (tire size: 195/65R15) and a set of the thermally-degraded test studless tires (tire size: 195/65R15) each were mounted on a test vehicle, a FR car (2000 cc) made in Japan. The brake stopping distance was measured which is the distance required for the car to stop on the iced surface at an air temperature of -6°C to -1°C after the brakes that lock up were applied at 30 km/h. The index of braking performance on ice of the fresh test studless tire of Example 1 was regarded as 100, and the braking performance on ice was expressed as an index by the following equation. The larger the index of braking performance on ice is, the better the braking performance on ice is. For a break-in of the surface of the test tires, a 100-km break-in driving was performed before the test.

(Index of braking performance on ice) = (Brake stopping distance in Example 1) / (Brake stopping distance) × 100

<Rolling resistance>

Using a rolling resistance tester, the rolling resistance of the produced test studless tire was determined under the running conditions of: a rim of 15 x 6JJ, an internal pressure of 230 kPa, a load of 3.43 kN, and a speed of 80 km/h. The rolling resistance of Comparative Example 1 was regarded as 100, and the result of each example was expressed as an index. The larger the index is, the more favorable the rolling resistance is.

<Abrasion resistance>

The produced test studless tires (tire size: 195/65R15) were mounted on a FR car (2000 cc) made in Japan, and the abrasion loss after 30000 km running was determined. The abrasion loss of Comparative Example 1 was regarded as 100, and the result of each example was expressed as an index. The larger the index is, the better the abrasion resistance is.

<Bloom>

The produced vulcanized rubber composition was visually evaluated for bloom formation.

A: no bloom
B: a little bloom
C: much bloom

[Table 1]

Rubber composition for cap tread

| | | | Examples | | | | | Comparative Examples | | |
|---|---|---|---|---|---|---|---|---|---|---|
| | | | 1 | 2 | 3 | 4 | 5 | 1 | 2 | 3 |
| Formulation (part(s) by mass) | Process 1 | NR | 50 | 50 | 50 | 50 | 50 | 50 | 50 | 50 |
| | | BR | 50 | 50 | 50 | 50 | 50 | 50 | 50 | 50 |
| | | Carbon black | 30 | 30 | 30 | 30 | 5 | 30 | 30 | 30 |
| | | Silica | 20 | 20 | 20 | 20 | 70 | 20 | 20 | 20 |
| | | Silane coupling agent | 1.6 | 1.6 | 1.6 | 1.6 | 1.6 | 1.6 | 1.6 | 1.6 |
| | | Oil | 20 | 20 | 20 | 20 | 45 | 20 | 20 | 20 |
| | | Stearic acid | 2 | 2 | 2 | 2 | 2 | 2 | 2 | 2 |
| | | Zinc oxide | 3 | 3 | 3 | 3 | 3 | 3 | 3 | 3 |
| | | Age resistor | 2 | 2 | 2 | 2 | 2 | 2 | 2 | 2 |
| | | Wax | 2 | 2 | 2 | 2 | 2 | 2 | 2 | 2 |
| | Process 2 | Sulfur | 1.5 | 1.5 | 1.5 | 1.5 | 1.5 | 1.5 | 1.5 | 1.5 |
| | | Vulcanization accelerator TBBS | - | - | - | - | - | - | 1.5 | - |
| | | Vulcanization accelerator 4m-MBTS | 1.5 | 1.5 | 1.5 | 1.5 | 1.5 | 1.5 | - | 1.5 |
| | | Vulcanization accelerator TMTM | 0.5 | 0.5 | 1.0 | 0.2 | 0.5 | - | - | - |
| | | Vulcanization accelerator DPG | 1.0 | - | 0.5 | 1.0 | - | 1.0 | 1.0 | 1.5 |
| Evaluation results | | Torque rise | 100 | 99 | 102 | 98 | 102 | 92 | 81 | 86 |
| | | Vulcanization time (T95) | 100 | 104 | 97 | 118 | 105 | 180 | 150 | 175 |
| | | Hardness (25 °C) | 46 | 46 | 46 | 46 | 47 | 46 | 46 | 46 |
| | | Hardness after thermal degradation (25 °C) | 48 | 48 | 48 | 48 | 49 | 48 | 55 | 49 |
| | | Performance on ice (fresh state) | 100 | 100 | 100 | 100 | 98 | 100 | 100 | 100 |
| | | Performance on ice (thermally-degraded state) | 100 | 102 | 100 | 99 | 96 | 100 | 80 | 97 |
| | | Rolling resistance | 99 | 100 | 98 | 100 | 96 | 100 | 102 | 99 |
| | | Abrasion resistance | 99 | 100 | 97 | 99 | 104 | 100 | 105 | 99 |
| | | Bloom | A | A | A | A | A | A | A | A |

Table 1 shows that, in the Examples in which the rubber compositions contained an isoprene-based rubber, silica, 4m-MBTS, and TMTM as a thiuram vulcanization accelerator, the increase in hardness caused by thermal degradation and the deterioration of performance on ice caused by thermal degradation were inhibited. In addition, each torque rise value was not decreased, and each vulcanization time $T_{95}$ was not significantly increased. In contrast, in Comparative Example 2 in which the rubber composition did not contain 4m-MBTS, the increase in hardness caused by thermal degradation and the deterioration of performance on ice caused by thermal degradation were not inhibited, and the torque rise value was smaller (cross-linking efficiency was lower) and the vulcanization time $T_{95}$ was larger than those of the Examples. In Comparative Examples 1 and 3 in which the rubber compositions contained an isoprene-based rubber, silica, and 4m-MBTS but did not contain TMTM, each torque rise value was smaller (cross-linking efficiency was lower) and each vulcanization time $T_{95}$ was larger than those of the Examples.

## Claims

1. A rubber composition for a cap tread, comprising:

a rubber component containing an isoprene-based rubber and butadiene rubber, wherein the amount of the butadiene rubber is 10 to 90 % by mass based on 100 % by mass of the rubber component;
silica;
a compound represented by formula (I) and/or (II); and
a thiuram vulcanization accelerator,

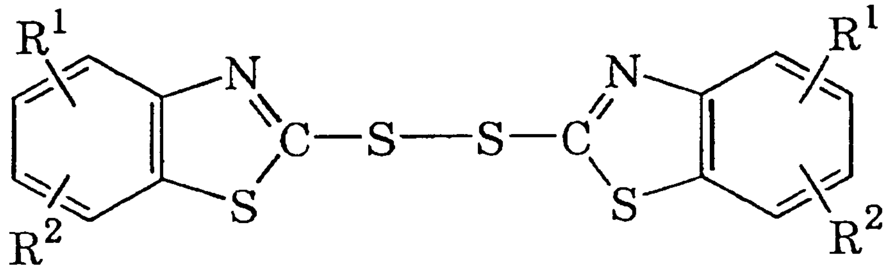

(I)

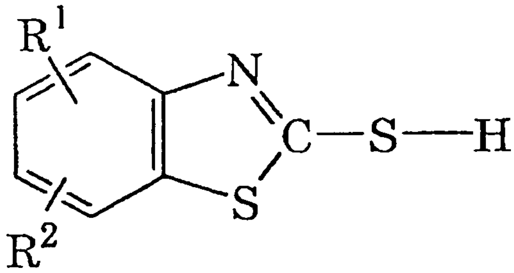

(II)

wherein $R^1$ and $R^2$ may be the same as or different from each other, and $R^1$ and $R^2$ each represent a hydrogen atom, an alkyl group, an aryl group, or an aralkyl group,
provided that the case where $R^1$ and $R^2$ are simultaneously hydrogen atoms is excluded,
wherein the amount of the thiuram vulcanization accelerator is 0.1 to 1.0 parts by mass per 100 parts by mass of the rubber component.

2. The rubber composition for a cap tread according to claim 1,
wherein said isoprene-based rubber is at least one rubber selected from the group consisting of an isoprene rubber, a natural rubber, and a modified natural rubber.

3. The rubber composition for a cap tread according to claim 1 or 2,
wherein said compound is represented by formula (III).

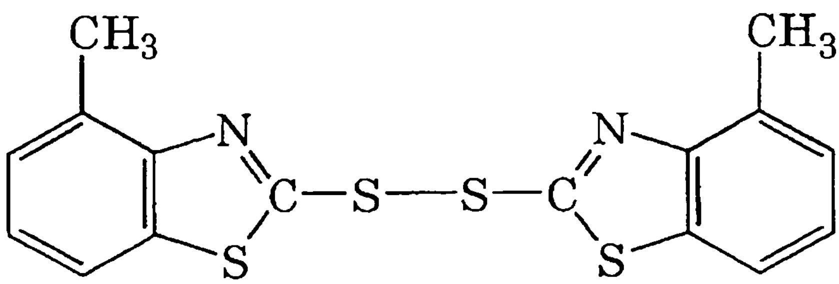

(III)

4. The rubber composition for a cap tread according to claims 1 to 3,

wherein the composition has a hardness of 42 to 70 at 25°C.

5. A studless tire that has a cap tread produced from the rubber composition according to claims 1 to 4.

## Patentansprüche

1. Kautschukzusammensetzung für eine Decklauffläche enthaltend:

   eine Kautschukkomponente enthaltend einen auf Isopren basierenden Kautschuk und einen Butadienkautschuk, wobei die Menge des Butadienkautschuks 10 bis 90 Massen-% bezogen auf 100 Massen-% der Kautschukkomponente beträgt,
   Silica,
   eine Verbindung, wiedergegeben durch die Formel (I) und/oder (II) sowie
   einen Thiuramvulkanisationsbeschleuniger,

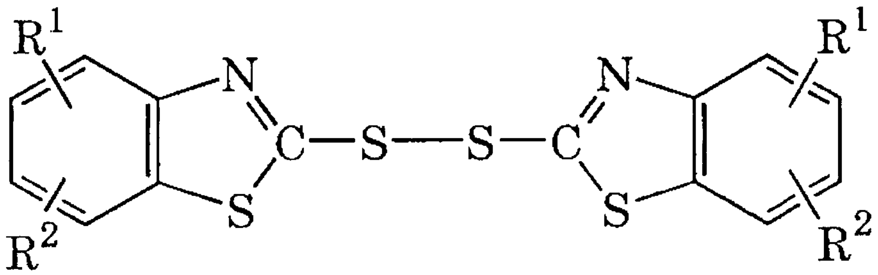

(I)

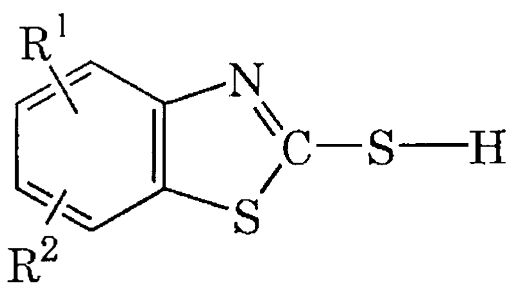

(II)

   worin $R^1$ und $R^2$ gleich oder voneinander verschieden sein können und $R^1$ und $R^2$ jeweils ein Wasserstoffatom, eine Alkylgruppe, eine Arylgruppe oder eine Aralkylgruppe bedeuten,
   mit der Maßgabe, dass der Fall, dass $R^1$ und $R^2$ gleichzeitig Wasserstoffatome sind, ausgeschlossen ist,
   wobei die Menge des Thiuramvulkanisationsbeschleunigers 0,1 bis 1,0 Massenteile bezogen auf 100 Massenteile der Kautschukkomponente beträgt.

2. Kautschukzusammensetzung für eine Decklauffläche nach Anspruch 1, wobei der auf Isopren basierende Kautschuk wenigstens ein Kautschuk ausgewählt aus der Gruppe bestehend auf einem Isoprenkautschuk, einem Naturkautschuk und einem modifizierten Naturkautschuk ist.

3. Kautschukzusammensetzung für eine Decklauffläche nach Anspruch 1 oder 2, wobei die Verbindung durch die Formel (III) wiedergegeben wird

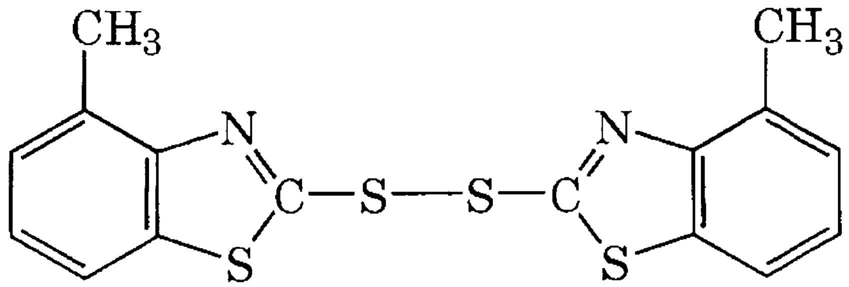

(III)

4. Kautschukzusammensetzung für eine Decklauffläche nach einem der Ansprüche 1 bis 3, wobei die Zusammensetzung eine Härte von 42 bis 70 bei 25°C aufweist.

5. Winterreifen, welcher eine Decklauffläche hergestellt aus einer Kautschukzusammensetzung nach einem der Ansprüche 1 bis 4 enthält.

**Revendications**

1. Composition de caoutchouc pour une bande de roulement, comprenant:

un composant caoutchouc contenant un caoutchouc à base d'isoprène et un caoutchouc de butadiène, la quantité du caoutchouc de butadiène étant de 10 à 90 % en masse pour 100 % en masse du composant caoutchouc ;
de la silice ;
un composé représenté par la formule (I) et/ou (II) ; et
un accélérateur de vulcanisation de type thiurame,

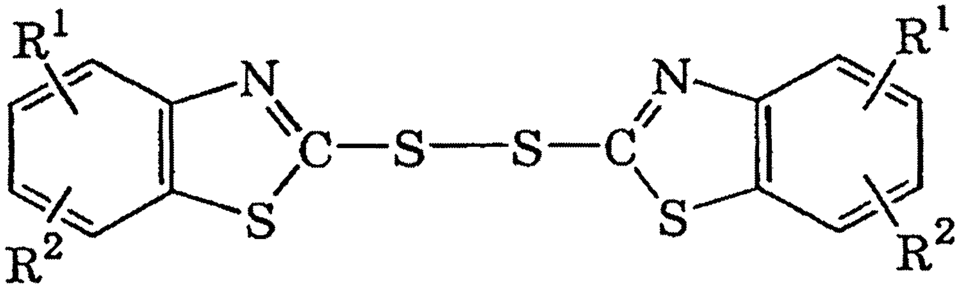

(I)

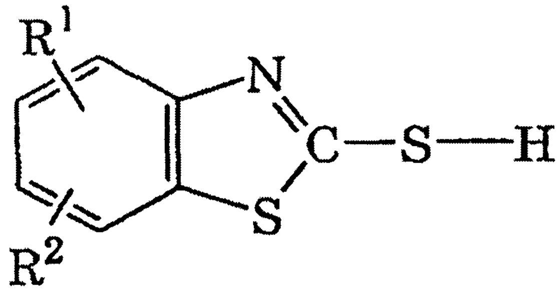

(II)

où $R^1$ et $R^2$ peuvent être identiques ou différents, et chacun de $R^1$ et $R^2$ représente un atome d'hydrogène, un groupe alkyle, un groupe aryle, ou un groupe aralkyle,
à l'exclusion du cas où $R^1$ et $R^2$ sont simultanément des atomes d'hydrogène,
dans laquelle la quantité de l'accélérateur de vulcanisation de type thiurame est de 0,1 à 1,0 partie en masse pour 100 parties en masse du composant caoutchouc.

**2.** Composition de caoutchouc pour une bande de roulement selon la revendication 1, dans laquelle ledit caoutchouc à base d'isoprène est au moins un caoutchouc choisi dans le groupe constitué par un caoutchouc d'isoprène, un caoutchouc naturel, et un caoutchouc naturel modifié.

**3.** Composition de caoutchouc pour une bande de roulement selon la revendication 1 ou 2, dans laquelle ledit composé est représenté par la formule (III) :

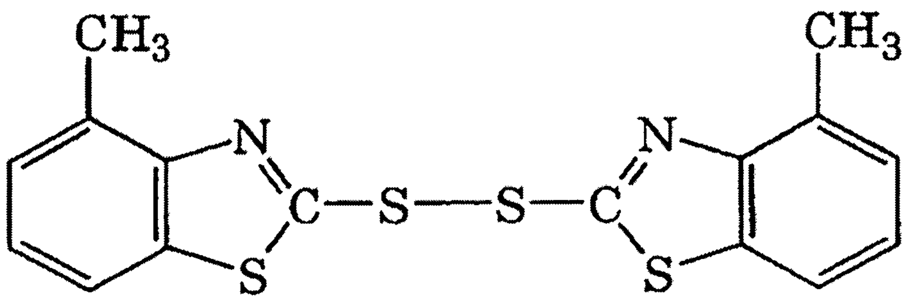

(III)

**4.** Composition de caoutchouc pour une bande de roulement selon les revendications 1 à 3, laquelle composition a une dureté de 42 à 70 à 25°C.

**5.** Pneu non clouté qui a une bande de roulement produite à partir de la composition de caoutchouc selon les revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10324779 A
- JP 11049891 A
- EP 1731560 A1